# FASCICULE DE BREVET EUROPEEN

(11) **EP 3 242 790 B1**
(45) Date de publication et mention de la délivrance du brevet: **27.11.2019**
(21) Numéro de dépôt: 15817927.5
(22) Date de dépôt: 31.12.2015
(51) Int. Cl.: B29C 64/00, B29C 70/68, B29C 65/04, B33Y 10/00

(54) **PROCÉDÉ POUR LA FABRICATION D'UNE PIÈCE COMPOSITE COMPLEXE, NOTAMMENT À MATRICE THERMOPLASTIQUE**
VERFAHREN ZUR HERSTELLUNG EINES KOMPLEXEN VERBUNDBAUTEILS, INSBESONDERE MIT EINER THERMOPLASTISCHEN MATRIX
METHOD FOR PRODUCING A COMPLEX COMPOSITE PART, IN PARTICULAR HAVING A THERMOPLASTIC MATRIX

(30) Priorité: 09.01.2015 FR 1550167
(43) Date de publication de la demande: 15.11.2017
(73) Titulaire: Daher Aerospace, 41400 Saint Julien De Chedon (FR)
(72) Inventeur: PORTET, Stéphanie, 44430 Le Loroux Bottereau (FR); VAUDOUR, Julie, 44118 La Chevrolière (FR)
(74) Mandataire: Ipside
(86) Numéro de dépôt international: PCT/EP2015/081476
(87) Numéro de publication internationale: WO 2016/110444

(56) Documents cités:
- EP-A1- 2 801 512
- EP-A1- 2 894 025
- WO-A1-2013/180848
- WO-A2-2008/146047

## Description

L'invention concerne un procédé pour la fabrication d'une pièce composite complexe, notamment à matrice thermoplastique et une pièce obtenue par un tel procédé L'invention et plus particulièrement, mais non exclusivement, destinée au domaine aéronautique et à la fabrication d'une pièce à matrice polymère renforcée par des fibres continues, dont la forme comprend plus d'une face, lesdites faces étant planes ou courbes.

Un telle pièce est, par exemple, un panneau plan ou courbe comportant des nervures ou des raidisseurs ou une pièce dièdre ou trièdre sans que ces exemples ne soient exhaustifs ou limitatifs.

Selon l'art antérieur, il est délicat d'obtenir une pièce composite à renfort fibreux continu s'étendant selon plus de deux faces. Un exemple de pièces s'étendant selon deux faces est une cornière en L. En effet, dès lors qu'il y a plus de deux faces, il est difficile, voire impossible, de conserver la continuité des fibres dans une telle configuration. Aussi, pour obtenir ce résultat des éléments additionnels doivent êre rapportés sur une première préforme, lesdits éléments étant rapportés par des techniques conventionnelles d'assemblage, telles que le soudage ou la cocuisson

Le document EP 2 726 272 décrit un procédé pour l'assemblage d'un renfort local par soudure sur un panneau. Ce procédé, pour sa mise en oeuvre nécessite que le polymère constituant la matrice du panneau ou du renfort soit un polymère thermoplastique et que les polymères constituant les deux matrices soient soudables. De plus un outillage conséquent est nécessaire pour sa mise en oeuvre.

Le document EP 2 987 305 décrit un procédé et un dispositif de soudage d'un raidisseur sur un panneau. Ce procédé permet de simplifier l'outillage, mais comporte les mêmes limitations que le précédent, ou requière qu'une bande thermoplastique soit intégrée au drapage du panneau au niveau des surfaces à souder. D'autres procédés de l'art antérieur mettent en oeuvre un soudage dynamique, par exemple par induction, entre les pièces, et nécessitent à cette fin qu'un suscepteur métallique soit intégré dans l'une des pièces assemblées à l'emplacement de la soudure.

Le document EP 2 987 305 décrit un procédé pour réaliser une pièce trièdre constituée d'un matériau composite à fibre continues et à matrice thermoplastique. Bien que ce procédé permette d'obtenir un pièce comportant 3 faces, la continuité desdites faces n'est pas assurée entre elles de sorte qu'il subsiste une ouverture entre les faces, ce qui s'avère gênant pour certaines applications de ce type de pièce, comme par exemple l'utilisation décrite dans FR 2 922 276.

Le document WO 2013 180848 décrit un procédé pour la fabrication par fabrication additive d'une structure secondaire, qui est ensuite rapportée sur une structure dite primaire.

Le document WO 2008 146047 décrit un procédé consistant à déposer par fabrication additive, une couche de matière sur un une pièce structurelle.

Il est par ailleurs connu de l'art antérieur de surmouler, notamment par injection, des aménagements en relief sur une pièce composite à matrice thermoplastique. Ce procédé est utilisé dans le domaine automobile ou dans celui des biens électroniques grand public. Il nécessite le développement d'un moule d'injection et reste limité à des pièces de dimension modeste, produites en très grande série. Ces conditions de mise en oeuvre ne sont généralement pas adaptées au domaine aéronautique.

L'invention vise à résoudre les inconvénients de l'art antérieur et concerne à cette fin un procédé selon la revendication 1.

Une étape de fabrication additive permet, selon le mode de mise en oeuvre, de particulariser une zone de la pièce en termes de propriété, ou de constituer un relief à vocation fonctionnelle ou structurale sur ladite préforme. Contrairement aux procédés de l'art antérieur, le procédé objet de l'invention n'utilise pas ou très peu d'outillage spécifique et présente peu de limitations en termes de dimension de la préforme.

Le terme préforme est ici utilisé dans un sens large correspondant à un composant composite devant subir des opérations complémentaires, notamment par assemblage, afin de constituer une pièce.

L'invention est avantageusement mise en oeuvre selon les modes de réalisation exposés ci-après, lesquels sont à considérer individuellement ou selon toute combinaison techniquement opérante.

Le polymère constituant la couche déposée à l'étape i) comprend une dispersion de particules métalliques. Ce mode de réalisation permet de conférer des propriétés de conduction électrique ou de perméabilité magnétique en surface de la préforme afin de constituer, par exemple, une protection de la pièce vis-à-vis de la foudre.

Le procédé objet de l'invention comprend, après l'étape i), une étape consistant à :
ii. réaliser un assemblage par une soudure mettant en fusion la couche de polymère thermoplastique déposée au cours de l'étape i).

Ce mode de réalisation est particulièrement avantageux lorsque la préforme composite comprend une matrice constituée d'un polymère thermodurcissable, et permet de rapporter facilement et localement une couche de polymère soudable.

La couche déposée à l'étape i) comporte des particules métalliques et le procédé de soudage est un procédé dynamique. Un tel procédé utilisant par exemple un chauffage par induction ou un chauffage par micro-ondes permet de chauffer localement, la matière, en profitant de l'effet suscepteur créé par les particules comprises dans la couche de polymère et ainsi d'accélérer les vitesses de soudage et de simplifier les outillages.

Selon un mode de réalisation **qui ne fait pas partie de la présente** invention, la couche déposée à l'étape i) constitue une nervure s'étendant perpendiculairement à la face de la préforme. Le terme nervure est ici utilisé dans un sens large indépendamment de tout effet technique particulier et désigne un relief de contour quelconque faisant saillie par rapport à la surface de la pièce.

Selon une variante de ce mode de réalisation, ne **faisant pas partie de la présente invention,** la préforme composite comporte deux faces sécantes et la nervure s'étend entre lesdites deux faces.

Selon un mode de réalisation particulier, **en dehors du champ de la présente** invention, le procédé objet de l'invention comprend après l'étape i) une étape consistant à :
iii. réaliser un assemblage en utilisant la nervure comme moyen de positionnement relatif des préformes assemblées.

Ce mode de réalisation permet de faciliter les travaux d'assemblage ultérieurs et notamment dans le cadre d'un assemblage dit « mécano », c'est-à-dire sans contre perçage, d'équipements tels que des crochets d'installation des systèmes, sur des pièces structurelles d'aéronef. L'utilisation de la fabrication additive pour la réalisation desdites nervures permet de profiter des possibilités de la commande numérique pour adapter précisément le positionnement desdites nervures à la forme réelle de la préforme.

Selon un autre mode de mise en oeuvre, également **hors du champ de la présente invention**, la préforme composite comporte 3 faces sécantes et la couche déposée à l'étape i) s'étend entre lesdites 3 faces. Ce mode de réalisation permet notamment de fermer une préforme trièdre dite « coin de malle » obtenue par le procédé décrit dans EP 2 987 305 notamment dans un but d'étanchéité.

Avantageusement, la couche déposée à l'étape i) est déposée selon un motif répété pour couvrir la surface délimitée. Ainsi, la consommation de polymère déposé par fabrication additive est réduite.

L'invention est exposée ci-après selon ses modes de réalisation préférés, nullement limitatifs, et en référence aux figures 1 à 4 dans lesquelles :
- la figure 1 représente schématiquement, selon une vue en perspective, deux exemples de mise en oeuvre du procédé objet de l'invention ;
- la figure 2 illustre selon une vue de gauche et en éclaté de la figure 1, un exemple d'assemblage de préformes utilisant les dépôts parfabrication additive ;
- la figure 3 montre de manière schématique et selon une vue en perspective un exemple de mise en oeuvre du procédé objet de l'invention sur une préforme dièdre ;
- et la figure 4, illustre schématiquement selon une vue en perspective et en éclaté, un exemple de mise en oeuvre du procédé objet de l'invention sur une préforme trièdre.

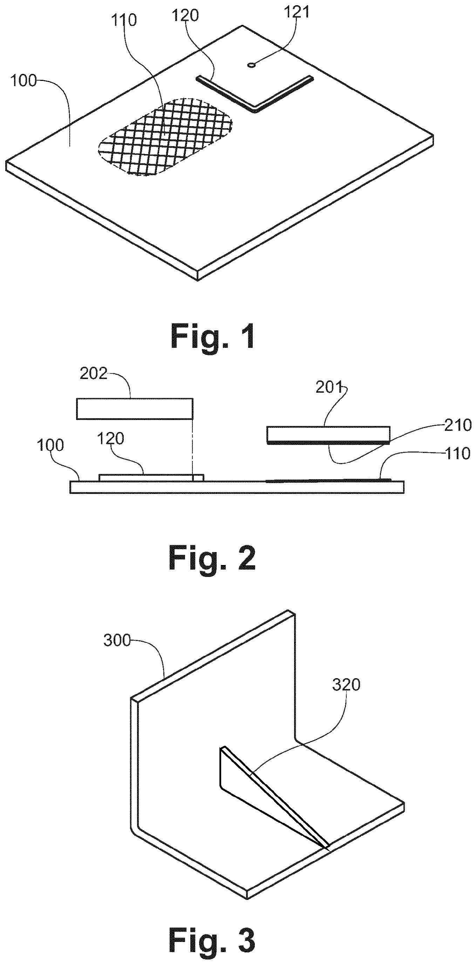

Figure 1, selon un exemple de réalisation schématique, le procédé objet de l'invention comporte la réalisation d'une zone (110) d'assemblage sur une préforme (100) consolidée Ladite zone (110) comporte une couche constituée d'un polymère thermoplastique. Selon cet exemple de réalisation, le polymère est déposé sur la zone de soudage.

Figure 2, le dépôt d'un film thermoplastique dans une zone (110) d'assemblage, permet ainsi d'assembler sur la surface de la préforme (100) une deuxième préforme (201) constituée d'un matériau composite stratifié. Selon un exemple de réalisation, ladite deuxième préforme comprend également une zone (210) sur laquelle un film thermoplastique est déposé parfabrication additive. Ainsi, il est possible de souder deux préformes (100, 201) dont le polymère constituant la matrice est une résine thermodurcissable. Le polymère thermoplastique déposé est choisi pour avoir une température de fusion telle que la température atteinte lors de la soudure n'affecte pas les propriétés de la matrice thermodurcissable. Alternativement, le polymère constituant la matrice d'une des deux préformes, ou les deux, est un polymère thermoplastique. Dans ce cas, le polymère déposé est par exemple de même nature que le polymère constituant la matrice, ou est volontairement choisi pour sa température de fusion inférieure au polymère constituant la matrice, ou encore pour ses propriété de miscibilité avec ledit polymère constituant la matrice, selon le résultat visé.

Selon un mode de réalisation, la soudure est réalisée de manière statique en pressant la deuxième (201) préforme sur la première (100) et en portant l'ensemble à la température de fusion du polymère à l'interface des deux pièces, par exemple en étuve.

Selon un autre mode de réalisation, la soudure est réalisée de manière dynamique par exemple par ultrasons. Selon d'autres exemples de soudure dynamique, celle-ci est réalisée par induction ou par micro-ondes. Dans ce cas, le polymère déposé est avantageusement chargé de particules aptes à concentrer le champs électrique et à agir comme suscepteur. À titre d'exemple, lesdites particules sont des particules métalliques ou céramiques, par exemple des ferrites.

En revenant à la figure 1, selon un autre mode de mise en oeuvre du procédé objet de l'invention, une forme (120) en relief est déposée à la surface de la pièce.

Figure 2, à titre d'exemple, le relief (120) est utilisé comme moyen de positionnement, sur la préforme (100) d'une pièce (202) assemblée avec celle-ci. La pièce (202) ainsi rapportée, est assemblée par soudage par collage ou par des fixations. Elle est constituée d'une matière plastique, d'un composite ou de métal. Ainsi, la préforme (100) comporte plusieurs reliefs de prépositionnement. À titre d'exemple la préforme est un cadre d'un fuselage d'aéronef et le relief (120) permet le positionnement d'un support pour un système. Ainsi, la pièce (202) rapportée est parfaitement positionnée sur la préforme.

En revenant à la figure 1, l'utilisation de la fabrication additive pour la réalisation du relief (120) de positionnement permet de combiner dans la même opération, c'est-à-dire sans démontage de la préforme (100) de la machine, la réalisation du relief et la réalisation d'un perçage (121) parfaitement positionné par rapport audit relief, et ainsi de permettre la réalisation d'un assemblage mécano de la pièce rapportée positionnée sur ce relief.

Figure 3, selon un autre mode de mise en oeuvre du procédé objet de l'invention, la préforme (300) composite comporte deux faces, et le procédé de fabrication additive permet de déposer un relief (320), par exemple une nervure s'étendant entre les deux faces de la préforme. Ladite nervure (320) est à vocation structurale ou fonctionnelle.

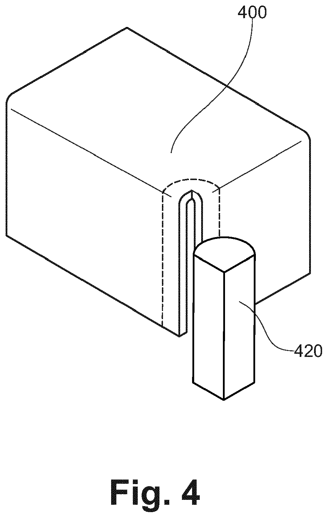

Figure 4, selon un autre mode de mise en oeuvre du procédé objet de l'invention, la préforme (400) est une pièce composite trièdre obtenue par pliage selon deux lignes de pliage sécantes. L'utilisation du procédé de fabrication additive permet de rapporter une pièce (420), s'étendant sur les 3 faces de la préforme, pour la fermeture de ladite préforme trièdre

La description ci-avant et les exemples de réalisation montrent que l'invention atteint les objectifs visés, en particulier elle permet de positionner précisément un ajout de matière sur une préforme composite, et dans la même opération de réaliser des usinages complémentaires, ainsi parfaitement positionnés par rapport à la préforme et auxdits ajouts de matière.

## Revendications

1. Procédé pour la fabrication d'une pièce composite à renfort fibreux continu et à matrice polymère à partir d'une préforme composite consolidée, **caractérisé en ce qu'**il comprend une étape consistant à :
i. déposer sur l'une des faces de la préforme (100, 300, 201, 400) une couche (110, 120, 320, 420) délimitée d'un polymère thermoplastique par un procédé de fabrication additive ; **caractérisé par**
ii. réaliser un assemblage d'une deuxième préforme (201) constituée d'un matériau composite stratifié sur la première préforme par une soudure mettant en fusion la couche (110, 210) de polymère thermoplastique déposée au cours de l'étape i) ;
et en ce que le polymère constituant la couche déposée à l'étape i) comprend une dispersion de particules métalliques.

2. Procédé selon la revendication 1, dans lequel le polymère constituant la matrice de la première ou de la deuxième préforme est un polymère thermodurcissable.

3. Procédé selon la revendication 1, dans lequel la soudure est réalisée par un procédé dynamique.

4. Procédé selon la revendication 1, dans lequel la couche déposée à l'étape i) est déposée selon un motif (111, 112) répété pour couvrir la surface (110) délimitée.

## Patentansprüche

1. Verfahren zur Herstellung eines Verbundbauteils mit durchgehender Faserverstärkung und mit Polymermatrix ausgehend von einem verfestigten Verbundvorformling, **dadurch gekennzeichnet, dass** es einen Schritt umfasst des:
i. Auftragens, auf einer der Flächen des Vorformlings (100, 300, 201, 400), einer begrenzten Schicht (110, 120, 320, 420) eines thermoplastischen Polymers durch ein Verfahren additiver Fertigung;
**gekennzeichnet durch**
ii. Durchführen einer Montage eines zweiten Vorformlings (201), der aus einem Schichtverbundmaterial besteht, auf dem ersten Vorformling **durch** eine Schweißung, bei der die Schicht (110, 210) des thermoplastischen Polymers, die im Lauf von Schritt i) aufgetragen wird, geschmolzen wird;
und **dadurch**, dass das Polymer, das die Schicht bildet, die in Schritt i) aufgetragen wird, eine Dispersion von Metallteilchen umfasst.

2. Verfahren nach Anspruch 1, wobei das Polymer, das die Matrix des ersten oder des zweiten Vorformlings bildet, ein wärmehärtendes Polymer ist.

3. Verfahren nach Anspruch 1, wobei die Schweißung durch ein dynamisches Verfahren ausgeführt wird.

4. Verfahren nach Anspruch 1, wobei die Schicht, die in Schritt i) aufgetragen wird, gemäß einem wiederholten Motiv (111, 112) aufgetragen wird, um die begrenzte Oberfläche (110) zu bedecken.

## Claims

1. Method for making a complex composite part having a continuous fibrous reinforcement and a polymer matrix from a consolidated composite preform, **characterised in that** it comprises a step consisting in:
i. depositing a defined layer (110, 120, 320, 420) of a thermoplastic polymer on one of the faces of the preform (100, 300, 201, 400), by an additive manufacturing method **characterised by**
ii. creating an assembly of a second preform (201) formed from a stratified composite material on the first preform by a weld that melts the layer (110, 210) of thermoplastic polymer deposited during the step i);
and in that the polymer forming the layer deposited in the step i) comprises a dispersion of metallic particles.

2. Method according to claim 1, wherein the polymer comprising the matrix of the first or of the second preform is a thermosetting polymer.

3. Method according to claim 1, wherein the weld is carried out by a dynamic method.

4. Method according to claim 1, wherein the layer deposited in the step i) is deposited according to a pattern (111, 112) that is repeated to cover the defined surface (110).
